# EUROPÄISCHE PATENTANMELDUNG

(11) **EP 4 762 913 A1**
(43) Veröffentlichungstag der Anmeldung: **24.06.2026**
(21) Anmeldenummer: 24221241.3
(22) Anmeldetag: 18.12.2024
(51) Int. Cl.: A01D 57/20, A01D 43/08

(54) **ERNTEVORSATZ-ZUR GANZPFLANZENERNTE**

(71) Anmelder: Deere & Company, Moline, IL 61265 (US)
(72) Erfinder: Schroeder, Maximilian, Mannheim (DE); Bongert, Dirk, Mannheim (DE); Schlamann, Frank, Mannheim (DE); Leveling, Ralf, Mannheim (DE); Weitenberg, Clemens, Mannheim (DE); Wuebbels, Richard, Mannheim (DE)
(74) Vertreter: Holst, Sönke

(57) **Zusammenfassung**

Ein Erntevorsatz (20) zur Ganzpflanzenernte, der an einer Erntemaschine (10) anbringbar und in einer Vorwärtsrichtung (V) über ein Feld bewegbar ist, umfasst:
ein tragendes Gestell (36),
eine Anzahl an nebeneinander angeordneten Mäh- und Einzugseinrichtungen (40) zum Abschneiden und Abfördern von Pflanzen vom Feld,
ein erstes Querförderband (46) und ein zweites Querförderband (48) zur Querförderung der durch die Mäh- und Einzugseinrichtungen (40) aufgenommenen Pflanzen in Richtung auf die Längsmittelebene des Erntevorsatzes (20),
ein Abgabeförderband (50) zur Förderung der von den Querförderbändern (46, 48) einlaufenden Pflanzen nach hinten zu einer rückwärtigen Abgabestelle des Erntevorsatzes (20), und
ein oberhalb des vorderen Bereichs des Abgabeförderbands (50) angeordnetes Umlenkelement (56) mit einer die von den Querförderbändern (46, 48) einlaufenden Pflanzen nach unten und/oder hinten umlenkenden Fläche (58).

## Beschreibung

Die Erfindung betrifft einen Erntevorsatz zur Ganzpflanzenernte, der an einer Erntemaschine anbringbar und in einer Vorwärtsrichtung über ein Feld bewegbar ist.

### Technologischer Hintergrund

Zur Ernte vollständiger, stängelartiger Pflanzen, wie Getreide oder Gras, werden im Stand der Technik unter anderem Erntevorsätze mit Querförderbändern (so genannte "Draper Belts") verwendet. Für die Getreideernte sind Schneidwerke bekannt, welche die Pflanzen mittels einer Haspel festhalten bzw. nach hinten fördern und mit Mähmessern abschneiden. Die abgeschnittenen, oberirdischen Teile der Pflanzen kommen auf den Querförderbändern zu liegen und werden durch diese zur Mitte des Erntevorsatzes transportiert. Dort werden sie durch ein mittleres Förderband übernommen, das sie nach hinten abfördert und durch eine rückwärtige Öffnung in einen Schrägförderer abgibt. Der Schrägförderer fördert die Pflanzen in eine selbstfahrende Erntemaschine, in der Regel einen Mähdrescher.

Erntevorsätze mit Querförderbändern werden auch in Verbindung mit Feldhäckslern zur Ernte von Grüngut (Gras oder anderen, niedrigeren stängelartigen Pflanzen, wie Getreidepflanzen für die Ganzpflanzensilage) mittels einer Aufnehmertrommel (Pick-up) oder eines Trommel- oder Scheibenmähwerks (EP 1 256 272 A1, EP 3 058 802 A1) oder unteren Schneidscheiben und koaxial darüber angeordneten Förderrotoren (DE 10 2015 206 845 A1 für die Ernte von kleineren Pflanzen als Mais) verwendet. Die EP 4 356 713 A1 zeigt weiterhin einen für die Maisernte vorgesehenen Erntevorsatz mit Querförderbändern, denen Mäh- und Einzugseinrichtungen mit unteren Schneidscheiben und jeweils mehreren, koaxial darüber angeordneten Förderrotoren vorgelagert sind.

Der Quertransport der Pflanzen basiert bei den Querförderbändern allein auf der Wirkung der Schwerkraft. Ein potenzielles Problem ist dabei der Übergang der Pflanzen von einem der seitlich fördernden Querförderbänder auf das nach hinten fördernde Förderband. Dieser Übergang ist relativ problemlos, wenn von vorn und von beiden Seiten her Pflanzen einlaufen, kann aber problematisch werden, wenn sie nur von einer einzigen Seite eintreffen, z.B. wenn abzuerntende Restbestände schmaler als die Arbeitsbreite sind oder Bestandslücken sich nur über einen Teil der Arbeitsbreite erstrecken. In solchen Fällen können die von einer Seite einlaufenden Pflanzen über das nach hinten fördernde Förderband hinausschießen und vom anderen Querförderband erfasst und nach unten eingezogen werden und darunter eine Verstopfung bilden, die vom Bediener zu beheben ist. Bei Schneidwerken für Getreide wurde vorgeschlagen, selbsttätig die Querfördergeschwindigkeit in derartigen Fällen zu vermindern, um das Problem zu vermeiden (EP 3 574 741 A1).

Ein anderer Ansatz zur Verbesserung des Übergangs der Pflanzen von den seitlichen Querförderbändern auf das nach hinten fördernde Förderband besteht darin, letzteres in zwei nebeneinander angeordnete Teile zu trennen, die V-förmig nach vorn hin divergieren. Die nach hinten fördernden Förderbänder sind somit nicht genau in Vorwärtsrichtung orientiert, sondern bestehen aus zwei nach vorn und außen abgewinkelten, seitlich nebeneinander angeordneten Hälften (EP 3 298 879 A1). Hierdurch lässt sich das Problem des Überschießens bei ungleichmäßiger seitlicher Verteilung des Ernteguts nicht wirklich lösen, was analog für das aus zwei sich mit dem flexiblem Mähmesser bewegenden Teilen aufgebaute Förderband nach EP 3 473 075 A1, die nach unten tordierten Innenabschnitte der Querförderer nach US 2020/0229347 A1 und die zur Seite hin abgewinkelten Förderbänder nach EP 4 356 713 A1 gilt.

Weitere Vorschläge zur Verbesserung des Gutflusses von Erntevorsätzen mit Querförderbändern sehen an der Rückwand des Erntevorsatzes oberhalb der Abgabeöffnung angeordnete Fördertrommeln mit Fingern vor, die das Erntegut nach hinten fördern, wobei der Fördertrommel an beiden äußeren Enden zusätzliche, um vertikale Achsen rotierende Förderer vorgelagert sein können (EP 2 772 130 A1). Diese Förderer sind der Abgabeöffnung benachbart und können allenfalls das Abgabeverhalten verbessern, haben jedoch keinen nennenswerten Einfluss auf den Übergang des Materials vom Querförderband auf das nach hinten fördernde Förderband.

Bei bisherigen Erntevorsätzen für Mais, die mit Mäh- und Einzugstrommeln zum Abschneiden der Pflanzen versehen sind, an deren Rückseiten der Quertransport der Pflanzen durch die Mäh- und Einzugstrommel, ggf. im Zusammenwirken mit rückwärtigen Querfördertrommeln, erfolgt, stellt sich ebenfalls das Problem, dass die Pflanzen in der Mitte des Erntevorsatzes nach hinten umzulenken sind. Hierzu wurde vorgeschlagen, in der Mitte des Erntevorsatzes dem Ende des Querförderkanals vorgelagert ein feststehendes Umlenkelement mit nach hinten und zur Seite hin geneigten Flächen anzuordnen, welches die Pflanzen nach hinten und nach oben umlenkt (DE 103 51 858 A1).

Weiterhin stellt sich bei derartigen Erntevorsätzen das Problem, dass Pflanzen in der Mitte des Erntevorsatzes beim Umlenken nach hinten mitunter nicht von den Abgabefördertrommeln erfasst werden, sodass diese Pflanzen quer vor den Abgabefördertrommeln liegen bleiben. Um diese Pflanzen nach unten und hinten zu drücken, wurde ein Umlenkelement vorgeschlagen, das sich vor und über dem Querförderkanal der Erntevorsatzes und dem Einzugskanal der Erntemaschine befindet (DE 101 08 516 A1). Das Umlenkelement kann starr und als Pyramide mit dreieckigem Querschnitt und nach unten gerichteter Spitze ausgeführt sein, oder es ist beweglich (frei mitlaufend oder angetrieben) und als um zwei Rollen umlaufender Fördergurt oder als mittig gelagerte, um die Querachse rotierende Walze mit dreieckigem Querschnitt ausgeführt sein. In der Praxis hat sich das Umlenkelement im erwähnten Kontext nicht bewährt, da in seiner Nähe keine angetriebenen Elemente vorhanden sind, welche die Pflanzen abfördern könnten. Zudem dient es nicht zur Verbesserung der Umlenkung der Pflanzen von der Querförderung in die nach hinten gerichtete Förderung in den Einzugskanal der Erntemaschine, sondern dazu, eventuell sich vor den Abgabefördertrommeln ansammelndes Erntegut nach unten oder hinten zu drücken.

### Aufgabe

Die vorliegende Erfindung hat sich daher zur Aufgabe gesetzt, einen mit Querförderbändern ausgestatten Erntevorsatz zur Ganzpflanzenernte bereit zu stellen, bei dem Übergangsprobleme auf das nach hinten fördernde Förderband in vermindertem Maße auftreten.

### Erfindung

Die vorliegende Erfindung wird durch die Patentansprüche definiert.

Ein Erntevorsatz zur Ganzpflanzenernte, der an einer Erntemaschine anbringbar und in einer Vorwärtsrichtung über ein Feld bewegbar ist, umfasst ein tragendes Gestell, eine Anzahl an nebeneinander angeordneten Mäh- und Einzugseinrichtungen zum Abschneiden und Abfördern von Pflanzen vom Feld, ein erstes Querförderband und ein zweites Querförderband zur Querförderung der durch die Mäh- und Einzugseinrichtungen aufgenommenen Pflanzen in Richtung auf die Längsmittelebene des Erntevorsatzes, und ein Abgabeförderband zur Förderung der von den Querförderbändern einlaufenden Pflanzen nach hinten zu einer rückwärtigen Abgabestelle des Erntevorsatzes. Oberhalb des vorderen Bereichs des Abgabeförderbands ist ein Umlenkelement mit einer die von den Querförderbändern einlaufenden Pflanzen nach unten und/oder hinten umlenkenden Fläche angeordnet.

Das Umlenkelement ist, anders als im Stand der Technik nach DE 101 08 561 A1, oberhalb des sich nach hinten bewegenden Abgabeförderbands angeordnet. Das Umlenkelement umfasst eine Fläche, welche die Pflanzen nach hinten und/oder unten umlenkt. Durch das darunter befindliche Abgabeförderband werden diese Pflanzen direkt in der Umgebung des Abgabeförderbands erfasst und abgefördert.

Die Mäh- und Einzugseinrichtungen können jeweils eine untere Schneidscheibe und darüber angeordnete Förderscheiben mit um ihren Umfang verteilten Aussparungen zur Aufnahme von Pflanzen aufweisen, die mittels der Schneidscheiben von ihren im Boden verbliebenden Wurzeln abgeschnitten werden.

### Ausführungsbeispiel

In den Zeichnungen sind vier nachfolgend näher beschriebene Ausführungsbeispiele dargestellt. Es zeigt:
- Fig. 1: eine schematische, seitliche Ansicht einer Erntemaschine mit einem Erntevorsatz zur
- Fig. 2: Ganzpflanzenernte, eine perspektivische Ansicht des Erntevorsatzes der Figur 1 von der linken Seite und schräg vorn betrachtet,
- Fig. 3: eine vergrößerte, perspektivische Draufsicht auf die Mitte des Erntevorsatzes gemäß der Figuren 1 und 2 von links hinten,
- Fig. 4 bis 6: perspektivische Ansichten auf das Umlenkelement des Erntevorsatzes der Figuren 1 bis 3,
- Fig. 7: eine perspektivische Ansicht der Mitte eines Erntevorsatzes nach einer zweiten Ausführungsform,
- Fig. 8: eine perspektivische Ansicht der Mitte eines Erntevorsatzes nach einer dritten Ausführungsform, und
- Fig. 9: eine perspektivische Ansicht der Mitte eines Erntevorsatzes nach einer vierten Ausführungsform.

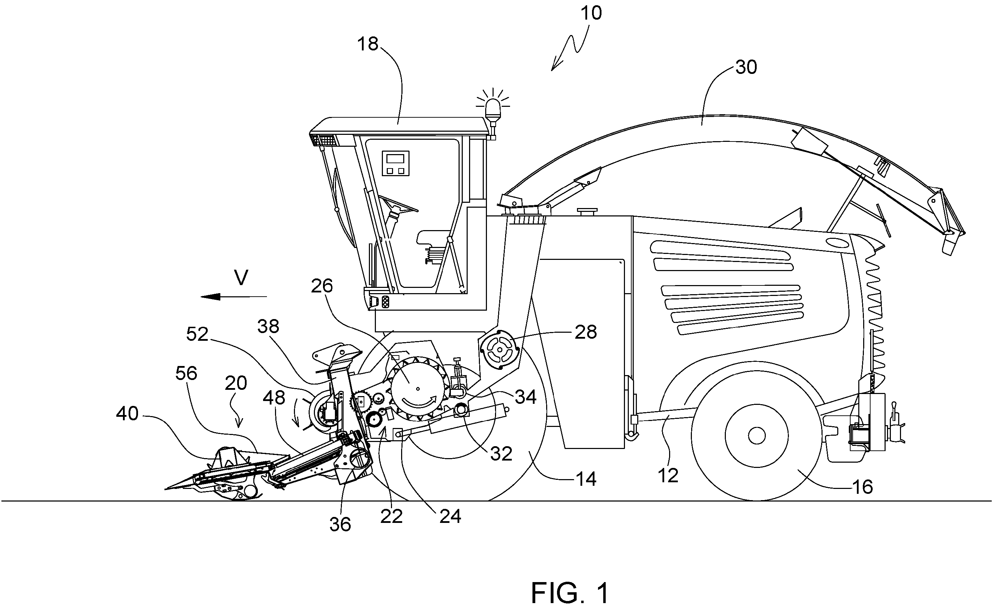

In der Figur 1 ist eine Erntemaschine in Form eines selbstfahrenden Feldhäckslers 10 in schematischer Seitenansicht dargestellt. Der Feldhäcksler 10 baut sich auf einem Rahmen 12 auf, der von vorderen angetriebenen Rädern 14 und lenkbaren rückwärtigen Rädern 16 getragen wird. Die Bedienung des Feldhäckslers 10 erfolgt von einer Fahrerkabine 18 aus, von der aus ein Erntevorsatz 20 zur Ganzpflanzenernte einsehbar ist. Mittels des Erntevorsatzes 20 vom Boden aufgenommenes Erntegut, z. B. Mais oder andere, stängelartige Pflanzen, wird über einen Einzugsförderer 22 mit Vorpresswalzen, die innerhalb eines Einzugsgehäuses 24 an der Frontseite des Feldhäckslers 10 angeordnet sind, einer unterhalb der Fahrerkabine 18 angeordneten Häckseltrommel 26 zugeführt, die es im Zusammenwirken mit einer Gegenschneide in kleine Stücke häckselt und es nach Durchlauf durch eine Nachbearbeitungseinrichtung mit zwei Prozessorwalzen 32, 34 einer Fördervorrichtung 28 aufgibt. Das Gut verlässt die Erntemaschine 10 zu einem nebenher fahrenden Transportfahrzeug über einen um eine etwa vertikale Achse drehbaren und in der Neigung verstellbaren Auswurfkrümmer 30. Im Folgenden beziehen sich Richtungsangaben, wie seitlich, unten und oben, auf die Vorwärtsrichtung V des Feldhäckslers 10, die in der Figur 1 nach links verläuft.

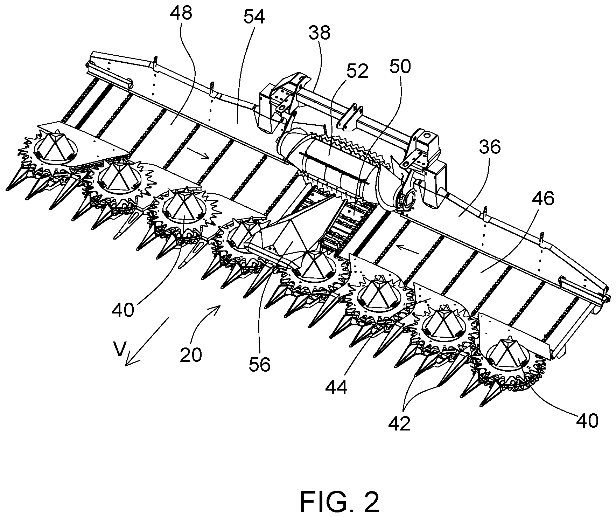

Die Figur 2 zeigt eine perspektivische Ansicht des Erntevorsatzes 20, der sich zur Ganzpflanzenernte eignet. Der Erntevorsatz 20 baut sich auf einem tragenden Gestell 36 auf, das in der Mitte mit einem rückwärtigen Anbaurahmen 38 versehen ist. Der Anbaurahmen 38 dient zur Anbringung des Erntevorsatzes 20 am Einzugsgehäuse 24 des Feldhäckslers 10. Der Anbaurahmen 38 weist als Abgabestelle für die geernteten Pflanzen eine mittige Abgabeöffnung auf, durch welche von einem Feld aufgenommenes Erntegut in den Einzugsförderer 22 abgebbar ist.

Das tragende Gestell 36 haltert an seiner Vorderseite eine Anzahl (im dargestellten Ausführungsbeispiel acht) von Mäh- und Einzugseinrichtungen 40, wie sie an üblichen Erntevorsätzen zur Ernte größerer stängelartiger Pflanzen (insbesondere Mais) verwendet werden. Die Mäh- und Einzugseinrichtungen 40 umfassen in an sich bekannter Weise, vgl. EP 0 760 200 A1, untere Schneidscheiben (rotierend oder feststehend) und darüber angeordnete Förderscheiben mit um ihren Umfang verteilten Aussparungen zur Aufnahme von Pflanzen, die mittels der Schneidscheiben von ihren im Boden verbliebenden Wurzeln abgeschnitten werden. Den Mäh- und Einzugseinrichtungen 40 sind Stängelteiler 42 vorgelagert. Die Mäh- und Einzugseinrichtungen 40 (abgesehen von den gegensinnig dazu arbeitenden, äußeren Mäh- und Einzugseinrichtungen 40) fördern im Erntebetrieb die Pflanzen an ihren Vorderseiten zunächst seitlich nach außen, dann nach hinten und letztlich mit ihren Rückseiten nach innen und geben die Pflanzen gegenüber der Drehachse der Mäh- und Einzugseinrichtungen 40 nach außen hin versetzt ab, da die Pflanzen dort durch sich in den Hüllkreis der Förderscheiben der Mäh- und Einzugseinrichtungen 40 eindringende Abstreifer 44 aus den Aussparungen der Förderscheiben der Mäh- und Einzugseinrichtungen 40 nach hinten und innen hinausgehoben werden. Die Pflanzen werden demnach nach hinten und innen hin abgegeben und gelangen, insbesondere durch nachfolgende, von vorn einlaufende Pflanzen nach hinten gedrückt, auf ein Querförderband 46 oder 48, das sich im Erntebetrieb nach innen, in Richtung auf die Längsmittelebene des Erntevorsatzes 20 hin bewegt. In der Mitte des Erntevorsatzes 20 wird das Erntegut durch ein Abgabeförderband 50 übernommen, welches das von den Querförderbändern 46 und 48 einlaufende Erntegut nach hinten durch die Abgabeöffnung des Anbaurahmens 38 und in den Einzugsförderer 22 verbringt. Die beiden der Längsmittelebene des Erntevorsatzes 20 direkt benachbarten, mittleren Mäh- und Einzugseinrichtungen 40 geben ihr Erntegut direkt dem Abgabeförderband 50 auf. Rückwärtig der Querförderbänder 46, 48 sind Rückwände 54 vorgesehen. In den Figuren erstrecken sich die Längsachsen (Förderrichtungen) der Querförderbänder 46, 48 quer zur Vorwärtsrichtung V. Man könnte sie auch in V-Form anordnen, wie in EP 3 298 879 A1.

Oberhalb des Abgabeförderbands 50 ist, der rückwärtigen Abgabeöffnung vorgelagert, eine als Zylinder mit konischen Enden ausgeführte Walze 52 vorgesehen, welche das Einführen der Pflanzen in die Abgabeöffnung erleichtert. Die konischen Enden der Walze 52 sind mit wendelförmigen Mitnehmern versehen, während der mittige, zylindrische Teil der Walze 52 mit sich axial erstreckenden Mitnehmern ausgestattet ist. Die Walze 52 kann in Richtung des in der Figur 1 dargestellten Pfeils angetrieben werden oder sich frei mitdrehen.

Der Erntevorsatz 20 dient somit, da die kompletten, abgeschnittenen Pflanzen in die Erntemaschine gefördert werden, zur Ganzpflanzenernte von größeren stängelartigen Pflanzen, wie Mais. Die Mäh- und Einzugseinrichtungen 40 können (ggf. mit geringfügigen Modifikationen, vgl. EP 0 824 856 A2) auch zur Einbringung so genannter Ganzpflanzensilage, d.h. von Getreidepflanzen, dienen.

Die bezüglich der Vorwärtsrichtung V horizontal oder leicht nach vorn und unten geneigt angeordneten Querförderbänder 46, 48 bewegen sich im Erntebetrieb mit ihren Oberseiten nach innen, während das bezüglich der Vorwärtsrichtung V horizontal oder leicht nach hinten und oben geneigt angeordnete Abgabeförderband 50 sich dann mit seiner Oberseite nach hinten bewegt, wie in der Figur 2 durch die Pfeile angedeutet. Der Antrieb der Mäh- und Einzugseinrichtungen 40 sowie der Querförderbänder 46, 48 und des Abgabeförderbands 50 sowie ggf. der Walze 52 kann über einen mechanischen Antriebsstrang vom den Erntevorsatz 20 tragenden Feldhäcksler 10 oder durch zugeordnete Elektro- oder Hydraulikmotoren (nicht gezeigt) erfolgen, die eine Verstellung der Fördergeschwindigkeit und eine Anpassung an die Fördergeschwindigkeit im Einzugsförderer 22 des Feldhäckslers 10 und somit an die Schnittlänge ermöglichen.

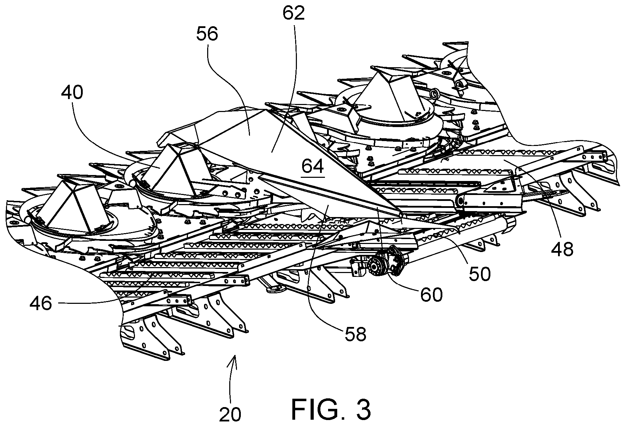

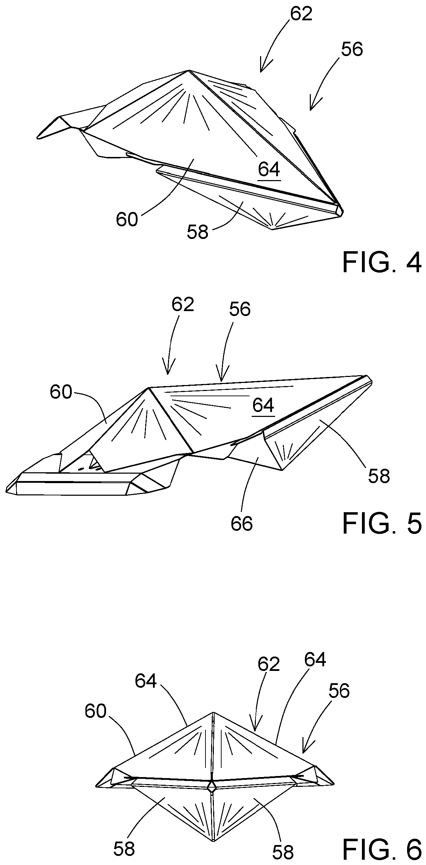

Wie in den Figuren 1 bis 6 erkennbar, ist oberhalb des vorderen Bereichs des Abgabeförderbands 50 ein Umlenkelement 56 mit einer die von den Querförderbändern 46, 48 einlaufenden Pflanzen nach unten und/oder hinten umlenkenden Fläche 58 angeordnet. Das Umlenkelement 56 ist als starrer Körper 60 ausgeführt, der vor dem Abgabeförderband 50 starr am tragenden Gestell 36 befestigt ist. Das Umlenkelement 56 umfasst eine obere Abdeckung 62, die dachförmig als Pyramide mit rhombischem Querschnitt ausgeführt ist und rückwärtige, oberhalb des Abgabeförderbands 50 angeordnete, nach hinten und oben geneigte Flächen 64 umfasst. Das Umlenkelement 56 insgesamt ist zur Längsmittelebene des Erntevorsatzes 20 symmetrisch ausgeführt. Daher umfasst es zwei Flächen 58, von denen eine nach links und eine nach rechts gerichtet ist. Die Flächen 58 bilden, gemeinsam mit einer vorderen Fläche 66, eine umgedrehte Pyramide mit dreieckigem Querschnitt. Die Flächen 58 sind nach hinten und unten abgewinkelt.

Im Betrieb werden von den Querförderbändern 46, 48 einlaufende Pflanzen, die in der Regel mit ihren unteren Enden nach vorn eintreffen, durch die Flächen 58 schräg nach unten und hinten umgelenkt. Dadurch können die Pflanzen durch das Abgabeförderband 50 unproblematisch erfasst und nach hinten zur Abgabeöffnung gefördert werden.

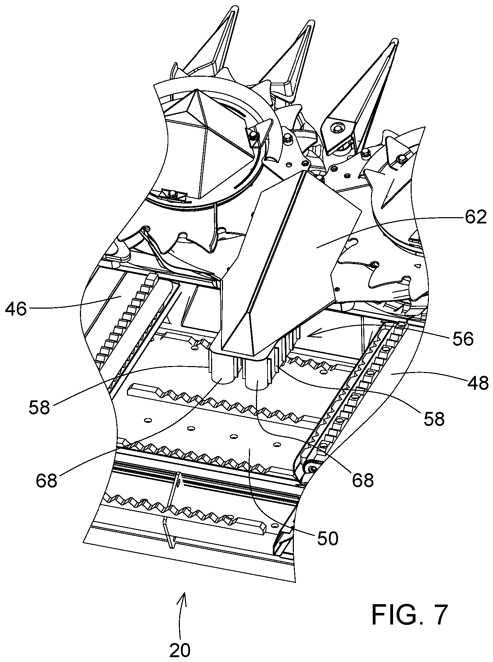

Bei der zweiten Ausführungsform nach Figur 7 werden die Flächen 58 des insgesamt ist zur Längsmittelebene des Erntevorsatzes 20 symmetrisch ausgeführten, oberhalb des vorderen Bereichs des Abgabeförderbands 50 positionierten und vor dem Abgabeförderband 50 am tragenden Gestell 36 befestigten Umlenkelements 56 durch um vordere und hintere Umlenkwalzen umlaufende, endlose Förderbänder 68 gebildet, deren sich orthogonal zur Oberseite des Abgabeförderbands 50 erstreckenden Außenflächen sich im Betrieb angetrieben nach hinten bewegen, um die Pflanzen nach hinten abzulenken. Anders als dargestellt, könnten die Flächen 58 gegenüber der Orthogonalen zur Oberseite des Abgabeförderbands 50 nach oben und außen geneigt sein und/oder die Verbindungsgerade zwischen den Umlenkwalzen jedes der beiden Förderbänder 68 nach hinten und innen abgewinkelt sein, analog zur ersten Ausführungsform.

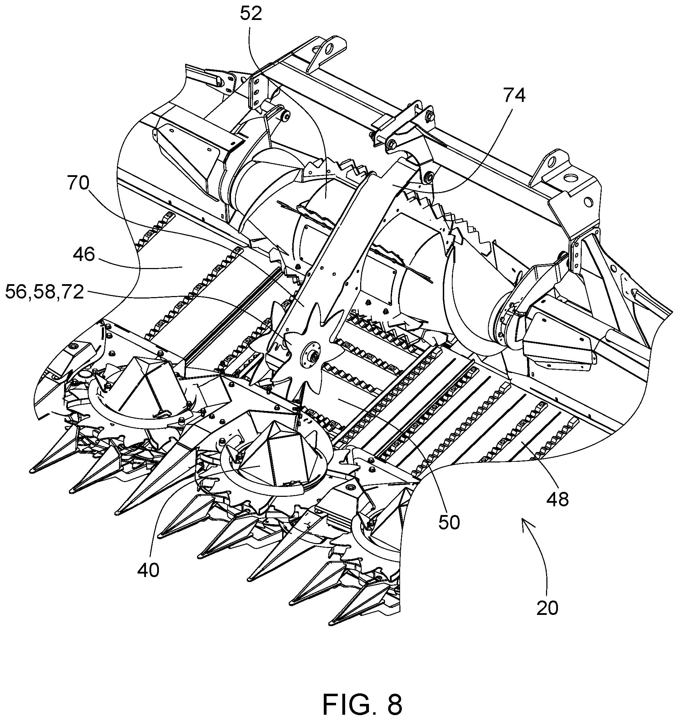

Bei der dritten Ausführungsform nach Figur 8 werden die Flächen 58 des insgesamt ist zur Längsmittelebene des Erntevorsatzes 20 symmetrisch ausgeführten, oberhalb des vorderen Bereichs des Abgabeförderbands 50 positionierten Umlenkelements 56 durch sternförmige Förderscheiben 72 gebildet. Diese sind durch eine Halterung 70 an einer mittigen Lagerung 74 der Walze 52 abgestützt. Die Förderscheiben 72 sind in sich flach und sind frei drehbar um ihre mittige Lagerung, mit der sie an der Halterung 70 abgestützt sind, obwohl es denkbar wäre, sie derart rotativ anzutreiben, dass sich ihre Unterseiten nach hinten drehen, sei es mechanisch über eine an der Halterung 70 angeordnete Welle oder fremdkraftbetrieben über eine in oder an der Halterung verlegten Versorgungsleitung für elektrischen Strom oder unter Druck stehendem Hydraulikfluid. Bei dieser Ausführungsform wird für weitere Einzelheiten hinsichtlich der Förderscheiben 72 auf die Offenbarung der DE 101 08 516 A1 und hinsichtlich der Walze 52 auf die Europ. Patentanmeldung 24220261.2 verwiesen, deren Inhalte durch Verweis mit in die vorliegenden Unterlagen aufgenommen werden.

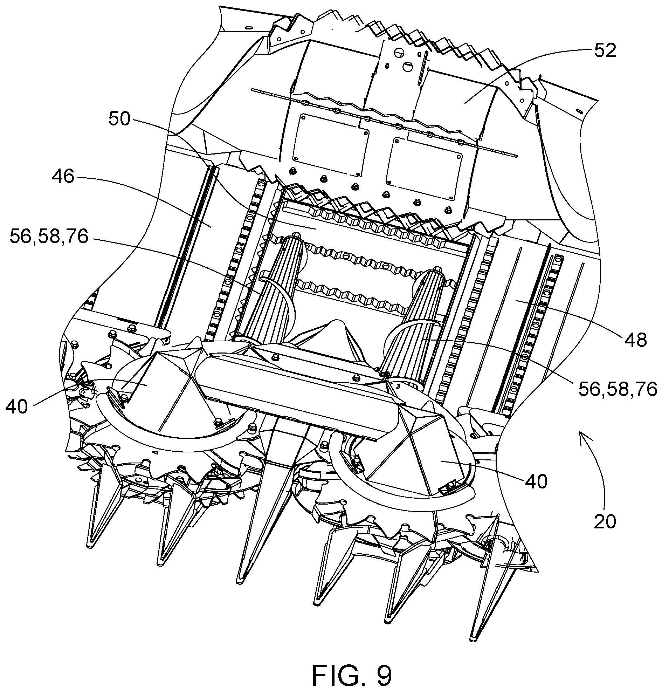

Bei der vierten Ausführungsform, die in der Figur 9 gezeigt wird, werden die Flächen 58 des Umlenkelementes 56 durch zwei nebeneinander angeordnete Förderschnecken 76 gebildet, die nach hinten konisch zulaufen und sich durch geeignete Antriebe mit ihren nach außen gewandten Flächen nach unten drehen. Auch hier sind die Förderschnecken 58 insgesamt zur Längsmittelebene des Erntevorsatzes 20 symmetrisch ausgeführt, oberhalb des vorderen Bereichs des Abgabeförderbands 50 positioniert und vor dem Abgabeförderband 50 am tragenden Gestell 36 befestigt.

## Patentansprüche

1. Erntevorsatz (20) zur Ganzpflanzenernte, der an einer Erntemaschine (10) anbringbar und in einer Vorwärtsrichtung (V) über ein Feld bewegbar ist, umfassend:
ein tragendes Gestell (36),
eine Anzahl an nebeneinander angeordneten Mäh- und Einzugseinrichtungen (40) zum Abschneiden und Abfördern von Pflanzen vom Feld,
ein erstes Querförderband (46) und ein zweites Querförderband (48) zur Querförderung der durch die Mäh- und Einzugseinrichtungen (40) aufgenommenen Pflanzen in Richtung auf die Längsmittelebene des Erntevorsatzes (20), und
ein Abgabeförderband (50) zur Förderung der von den Querförderbändern (46, 48) einlaufenden Pflanzen nach hinten zu einer rückwärtigen Abgabestelle des Erntevorsatzes (20),
**dadurch gekennzeichnet, dass** oberhalb des vorderen Bereichs des Abgabeförderbands (50) ein Umlenkelement (56) mit einer die von den Querförderbändern (46, 48) einlaufenden Pflanzen nach unten und/oder hinten umlenkenden Fläche (58) angeordnet ist.

2. Erntevorsatz (20) nach Anspruch 1, wobei die Fläche (58) starr oder beweglich ist.

3. Erntevorsatz (20) nach Anspruch 2, wobei die bewegliche Fläche (58) angetrieben oder frei beweglich ist.

4. Erntevorsatz (20) nach Anspruch 2, wobei zwei Flächen (58) an einem zur Längsmittelebene des Erntevorsatzes (20) symmetrischen, starren Körper (60) vorgesehen und nach hinten und/oder unten geneigt sind.

5. Erntevorsatz (20) nach Anspruch 4, wobei oberhalb des Körpers (60) eine dachförmige Abdeckung (62) angebracht ist.

6. Erntevorsatz (20) nach Anspruch 3, wobei die Fläche (58) durch ein Förderband (68) gebildet wird, dessem in Vorwärtsrichtung hintereinander angeordneten Umlenkwalzen um vertikale Achsen rotieren.

7. Erntevorsatz (20) nach Anspruch 3, wobei die Fläche (58) durch eine sternförmige Förderscheibe (72) gebildet wird.

8. Erntevorsatz (20) nach Anspruch 7, wobei zwei Förderscheiben (78) an einer mittigen Halterung (70) befestigt sind.

9. Erntevorsatz (20) nach Anspruch 8, wobei die Halterung (70) an einer Walze (52) oder an deren Lagerung (74) abgestützt ist, die sich im rückwärtigen Bereich und oberhalb des Abgabeförderbands (50) befindet.

10. Erntevorsatz (20) nach Anspruch 3, wobei die Fläche (58) durch eine sich in Vorwärtsrichtung (V) erstreckende Förderschnecke (76) gebildet wird.

11. Erntevorsatz (20) nach Anspruch 10, wobei die Förderschnecke (76) sich nach hinten hin konisch verengt.

12. Erntevorsatz (20) nach einem der Ansprüche 1 bis 9, wobei die Mäh- und Einzugseinrichtungen (40 jeweils eine untere Schneidscheibe und darüber angeordnete Förderscheiben mit um ihren Umfang verteilten Aussparungen zur Aufnahme von Pflanzen aufweisen, die mittels der Schneidscheiben von ihren im Boden verbliebenden Wurzeln abgeschnitten werden.
